# FASCICULE DE BREVET EUROPEEN

(11) **EP 3 294 434 B1**
(45) Date de publication et mention de la délivrance du brevet: **19.06.2019**
(21) Numéro de dépôt: 16731205.7
(22) Date de dépôt: 14.04.2016
(51) Int. Cl.: B01D 35/30, F02M 37/22, B01D 27/08

(54) **SYSTÈME DE FIXATION D'UN FILTRE A CARBURANT**
SYSTEM ZUR BEFESTIGUNG EINES KRAFTSTOFFFILTERS
SYSTEM FOR ATTACHING A FUEL FILTER

(30) Priorité: 13.05.2015 FR 1554294
(43) Date de publication de la demande: 21.03.2018
(73) Titulaire: PSA AUTOMOBILES S.A., 78300 Poissy (FR)
(72) Inventeur: GABRIELS, Remy, 91080 Courcouronnes (FR); LE MOINE, Bruno, 94600 Choisy le Roi (FR)
(74) Mandataire: Bourguignon, Eric Pascal Jean
(86) Numéro de dépôt international: PCT/FR2016/050873
(87) Numéro de publication internationale: WO 2016/181047

(56) Documents cités:
- WO-A1-2008/030707
- WO-A1-2010/074676
- US-A1- 2009 321 340

## Description

L'invention a trait au domaine des véhicules automobiles, et plus précisément à la mise en position des filtres à carburant sur la caisse d'un véhicule automobile.

De manière générale, les véhicules automobiles sont pourvus d'un filtre à carburant, monté sur leur caisse. Le filtre à carburant est un composant mécanique essentiel, permettant de protéger le système d'injection d'un véhicule, en éliminant un maximum d'impuretés en suspension, dans le carburant présent dans le réservoir du véhicule automobile ou la tuyauterie d'alimentation en carburant. Ces impuretés peuvent provoquer l'encrassement du système d'injection de carburant, un mauvais fonctionnement du moteur, et sa possible détérioration. Il est donc important de remplacer un filtre à carburant, après une période de temps d'utilisation du véhicule préconisée par le constructeur.

Le filtre à carburant est généralement disposé à proximité du moteur du véhicule automobile, et est solidaire de la caisse en partie supérieure. Il est donc accessible par le dessus du véhicule, en soulevant son capot.

Le remplacement d'un filtre à carburant n'est pas une opération simple à effectuer. En effet, pour changer le filtre à carburant du véhicule automobile, une multitude d'outils et d'opérations sont nécessaires. Le couvercle du filtre à carburant doit être dévissé puis retiré du véhicule automobile avec le filtre, laissant en position la cuve du filtre à carburant. La cuve doit être dévissée à son tour, puis purgée, et enfin nettoyée. Une fois la cuve nettoyée, les joints doivent être remis en position sur la cuve, et c'est seulement à partir de cette étape qu'un nouveau filtre peut être inséré dans la cuve, qui peut alors être remontée sur le véhicule automobile.

De plus, la norme euro 6.2, bientôt mise en vigueur, impose aux constructeurs automobiles de modifier la position du filtre à carburant sur les véhicules automobiles, pour permettre l'accès au filtre à carburant par le dessous de la caisse d'un véhicule automobile. Cette norme euro 6.2 impose ainsi d'adapter le montage et le démontage du filtre à carburant par le dessous.

Le document WO 2008/030707 décrit un système de fixation d'un filtre à carburant sur une caisse d'un véhicule automobile, le système de fixation comprenant :
- un support solidaire de la caisse et muni d'au moins deux pattes de support,
- le filtre à carburant comprenant un corps cylindrique prolongé d'une collerette creusée d'au moins deux encoches en forme de L définissant une portion d'insertion et une portion de blocage, aptes à recevoir les deux pattes de support pour la mise en position du filtre à carburant sur le support, lesdites encoches débouchant sur un bord supérieur de la collerette.

Le document GB 2333246 décrit un ensemble de filtration comprenant une tête solidaire de la caisse d'un véhicule et un boîtier contenant le filtre, ce boîtier pouvant être démonté par le dessous de l'ensemble filtre. Le boîtier est creusé d'encoches et la tête comprend des projections aptes à s'insérer dans les encoches, pour maintenir le boîtier en position sur la tête. De cette façon, le boîtier est amovible et peut être démonté facilement et sans outils, par une rotation du boîtier.

Toutefois, l'utilisation d'un tel ensemble de filtration de l'art antérieur présente quelques inconvénients. En effet, la tenue en position de cet ensemble n'est pas garantie, et des vibrations pourraient entrainer en rotation le boîtier et provoquer son dévissage, voire sa séparation de la tête. De plus, cet ensemble assure un démontage facile du boîtier contenant le filtre à carburant, mais le démontage de la tête demeure toujours aussi fastidieux.

Un premier objectif est de proposer un système de filtration permettant de démonter le filtre à carburant intégralement depuis le dessous d'un véhicule automobile, en accédant à sa caisse en partie inférieure.

Un deuxième objectif est de proposer un système de filtration facilitant le montage et le démontage du filtre à carburant, en excluant la nécessité d'utiliser des outils pour réaliser ces opérations.

Un troisième objectif est de proposer un système de filtration assurant le maintien en position du filtre à carburant sur la caisse d'un véhicule automobile.

A cet effet, il est proposé en premier lieu un système de fixation selon la revendication 1.

Ce système de fixation permet, grâce à ses encoches débouchantes sur le bord supérieur de la collerette, de positionner efficacement un filtre à carburant sur la caisse d'un véhicule par le dessous. De plus, la patte de blocage et l'élément de blocage permettent de maintenir en position le filtre à carburant sur le support, lorsque le véhicule automobile est en mouvement.

Diverses caractéristiques supplémentaires peuvent être prévues, seules ou en combinaison :
- le corps cylindrique comprend une troisième encoche apte à recevoir la patte de guidage ;
- l'élément de blocage élastique est une butée solidaire de la saillie primaire, apte à venir au contact d'un flanc de la première patte de blocage pour maintenir la première patte de blocage dans la deuxième portion de blocage ;
- l'élément de blocage élastique est une coupole solidaire de la saillie primaire, apte à s'insérer dans une réserve creusée dans la première patte de blocage pour maintenir la première patte de blocage dans la deuxième portion de blocage ;
- l'élément de blocage élastique est solidaire de la première patte de blocage et mobile entre deux positions :
   o une position de blocage du filtre à carburant dans laquelle l'élément de blocage élastique vient s'insérer dans un trou de la saillie primaire, permettant le maintien en position de la première patte de blocage dans la deuxième portion de blocage,
   o une position libre du filtre à carburant dans laquelle l'élément de blocage élastique est écarté du trou de la saillie primaire, permettant la rotation du filtre à carburant et l'échappement de la première patte de blocage par la deuxième portion d'insertion ;
- l'élément de blocage élastique est un pion de centrage coulissant par rapport à la première patte de blocage, un ressort de rappel enveloppant le pion de centrage étant situé entre la saillie primaire et la première patte de blocage, et un plateau solidaire du pion de centrage étant positionné entre la saillie primaire et le ressort de rappel de sorte à :
   ∘ venir au contact de la saillie primaire dans la position de blocage de du filtre à carburant,
   ∘ venir au contact de la première patte de blocage dans la position libre du filtre à carburant ;
- le support comprend une deuxième patte de blocage, le corps cylindrique comprend une saillie secondaire, le système de fixation comprenant un deuxième élément de blocage élastique permettant l'immobilisation de la deuxième patte de blocage par rapport à la saillie secondaire.

Le deuxième élément de blocage élastique, dans une mise en oeuvre, est une butée solidaire de la saillie secondaire, apte à venir au contact d'un flanc de la deuxième patte de blocage pour maintenir la deuxième patte de blocage dans la deuxième portion de blocage.

Dans une autre mise en oeuvre, le deuxième élément de blocage élastique est une coupole, solidaire de la saillie secondaire, apte à s'insérer dans une réserve creusée dans la deuxième patte de blocage pour maintenir la deuxième patte de blocage dans la deuxième portion de blocage.

Il est proposé, en second lieu, un véhicule automobile comprenant un système de fixation, tel que précédemment décrit.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective de dessus d'un véhicule automobile muni d'un système de fixation d'un filtre à carburant relié à une caisse du véhicule automobile.
- la figure 2 est une vue en perspective éclatée d'un système de fixation d'un filtre à carburant comprenant un support et le filtre à carburant.
- la figure 3 est une vue de détail du filtre à carburant montrant la première encoche.
- la figure 4 est vue de détail du filtre à carburant montrant la deuxième encoche.
- la figure 5 est une vue de détail du filtre à carburant montrant la troisième encoche.
- la figure 6 est une vue en coupe partielle du système de fixation du filtre à carburant montrant les étapes de la mise en position de la patte du support dans une portion de blocage du corps du filtre à carburant.
- la figure 7 est une vue en coupe partielle montrant une saillie primaire du corps du filtre à carburant, solidaire de la première patte du support au moyen d'un premier élément de blocage.
- la figure 8 est une vue en coupe partielle montrant la saillie secondaire du corps du filtre à carburant, solidaire de la deuxième patte du support au moyen d'un deuxième élément de blocage.
- la figure 9 est une vue en coupe partielle montrant une saillie du corps du filtre à carburant, solidaire d'une patte du support au moyen d'un troisième élément de blocage dans une position de blocage du filtre à carburant.
- la figure 10 est une vue en coupe partielle montrant une saillie du corps du filtre à carburant, solidaire d'une patte du support au moyen d'un troisième élément de blocage dans une position libre du filtre à carburant.

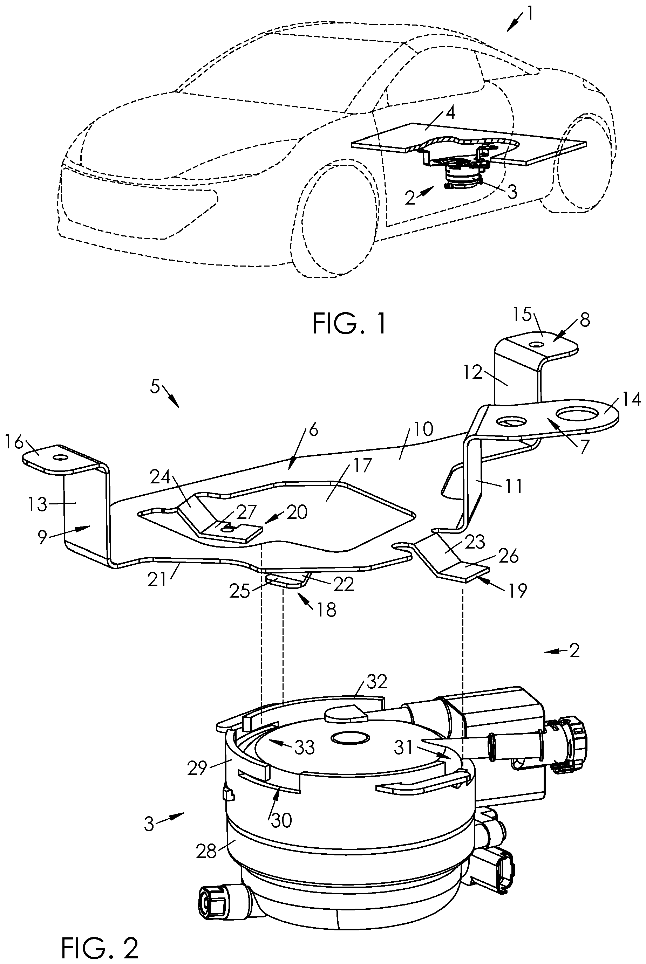

Sur la figure 1 est représenté un véhicule **1** automobile comprenant un système **2** de fixation d'un filtre **3** à carburant, ce système **2** de fixation étant solidaire d'une caisse **4** du véhicule **1** automobile.

Comme illustré sur la figure 2, le système **2** de fixation est composé d'un support **5** et du filtre **3** à carburant. Le support **5** est formé à partir d'une platine **6** comprenant trois pattes **7, 8, 9** de fixation aptes à solidariser le support **5** à la caisse **4** par un moyen de fixation, par exemple des vis. Les trois pattes **7, 8, 9** de fixation s'étendent en saillie depuis une face **10** d'extrémité supérieure de la platine **6,** et comprennent respectivement une section **11, 12, 13** perpendiculaire à la platine **6** et une section **14, 15, 16** parallèle à la platine **6,** les sections **14, 15, 16** parallèles à la platine **6** étant aptes à venir en appui sur la caisse **4.** La platine **6** comprend également une ouverture **17** centrale, apte à alléger la masse de la platine **6** pour réduire la consommation du véhicule **1** automobile en carburant.

Le support **5** comprend deux pattes **18, 19** de support, à savoir une patte **18** de guidage et une première patte **19** de blocage.

Avantageusement le support **5** comprend une deuxième patte **20** de blocage pour consolider la fixation du filtre **3** à carburant sur le support **5,** les pattes **18, 19, 20** de support ayant pour fonction de soutenir le filtre **3** à carburant pour sa mise en position et sa fixation sur le support **5.** Ces trois pattes **18, 19, 20** de support s'étendent en saillie depuis une face **21** d'extrémité inférieure de la platine **6** et sont respectivement composées d'une section **22, 23, 24** primaire, inclinée par rapport à la platine **6** et une section **25, 26, 27** secondaire, parallèle à la platine **6.**

Le filtre **3** à carburant comprend un corps **28** cylindrique prolongé d'une collerette **29,** cette collerette **29** est creusée de deux encoches **30, 31** en forme de "L", débouchantes sur un bord **32** supérieur de la collerette **29.**

Avantageusement le filtre **3** à carburant comprend une troisième encoche **33,** le nombre d'encoches correspondant au nombre de pattes de support que comprend le système **2** de fixation.

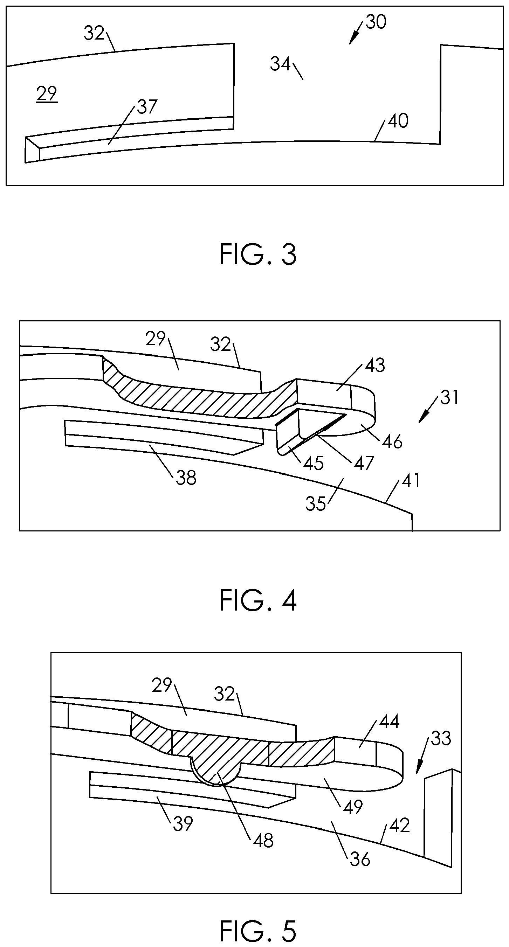

Comme illustré sur les figures 3, 4 et 5 les encoches **30, 31, 33** sont respectivement composées d'une portion **34, 35, 36** d'insertion et d'une portion **37, 38, 39** de blocage, la figure 3 montrant la première encoche **30,** la figure 4 montrant la deuxième encoche **31** et la figure 5 montrant la troisième encoche **33.** Les portions **34, 35, 36** d'insertion possèdent une largeur supérieure à la largeur des pattes **18, 19, 20** de support pour pouvoir accueillir et guider les pattes **18, 19, 20** de support, les portions **34, 35, 36** d'insertion comprenant respectivement un fond **40, 41, 42.**

Le filtre **3** à carburant comprend une saillie **43** primaire, sensiblement parallèle au bord **32** supérieur, et s'étendant radialement depuis la collerette **29.** La saillie **43** primaire a pour fonction la solidarisation du filtre **3** à carburant avec la première patte **19** de blocage.

Avantageusement le filtre **3** à carburant comprend une saillie **44** secondaire identique à la saillie **43** primaire, pour solidariser le filtre **3** à carburant à la deuxième patte **20** de blocage.

L'on décrit maintenant des éléments de blocage, en référence à la saillie **43** primaire, étant entendu que ce qui va être dit en référence à la saillie **43** primaire est applicable en variante ou en combinaison, à la saillie **44** secondaire. En d'autres termes, la saillie **43** primaire et/ou la saillie **44** secondaire peuvent être pourvues de la butée **45** ou de la coupole **48,** ou du pion **53** de centrage qui vont être décrits en référence aux figures.

Le filtre **3** à carburant comprend un premier élément de blocage, apte à maintenir en position le filtre **3** à carburant sur la platine **6,** en solidarisant la saillie **43** primaire à la première patte **19** de blocage.

Dans une mise en oeuvre, le premier élément de blocage est une butée **45** solidaire de la saillie **43** primaire, comme on peut le voir sur la figure 4. La butée **45** s'étend perpendiculairement par rapport au bord **32** supérieur, depuis un bord **46** primaire inférieur de la saillie **43** primaire et comprend une pente **47.**

Avantageusement le filtre **3** à carburant comprend un deuxième élément de blocage pour pouvoir solidariser la deuxième patte **20** de blocage à la saillie **44** secondaire. Dans une mise en oeuvre, le deuxième élément de blocage est une coupole **48** s'étendant verticalement depuis un bord **49** secondaire inférieur de la saillie **44** secondaire, comme illustré sur la figure 5.

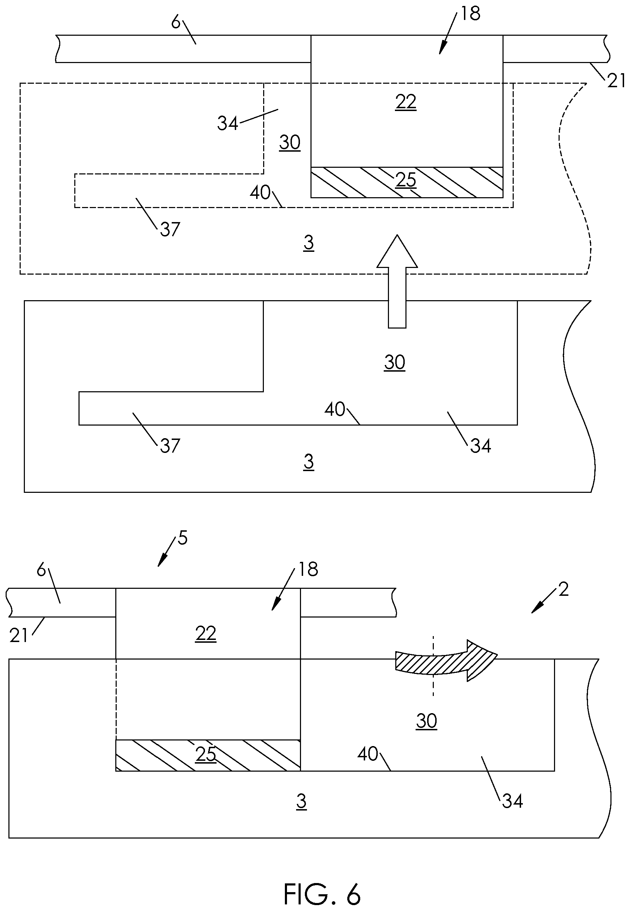

La mise en position du filtre **3** à carburant sur le support **5** se fait en deux étapes. La première étape de la mise en position du filtre **3** à carburant consiste à aligner les encoches **30, 31, 33** avec les trois pattes **18, 19, 20** de support. Une fois cette étape réalisée, le filtre **3** à carburant peut être emboîté au support **5,** via ses encoches **30, 31, 33** par un déplacement vertical du filtre **3** à carburant, en le rapprochant du support **5,** et plus précisément via les portions **34, 35, 36** d'insertion, comme le montrent les flèches blanches sur les figures 6, 7 et 8. Les portions **34, 35, 36** d'insertion sont assez larges pour insérer les trois pattes **18**, **19, 20** de support, comme le montrent les figures 6, 7 et 8.

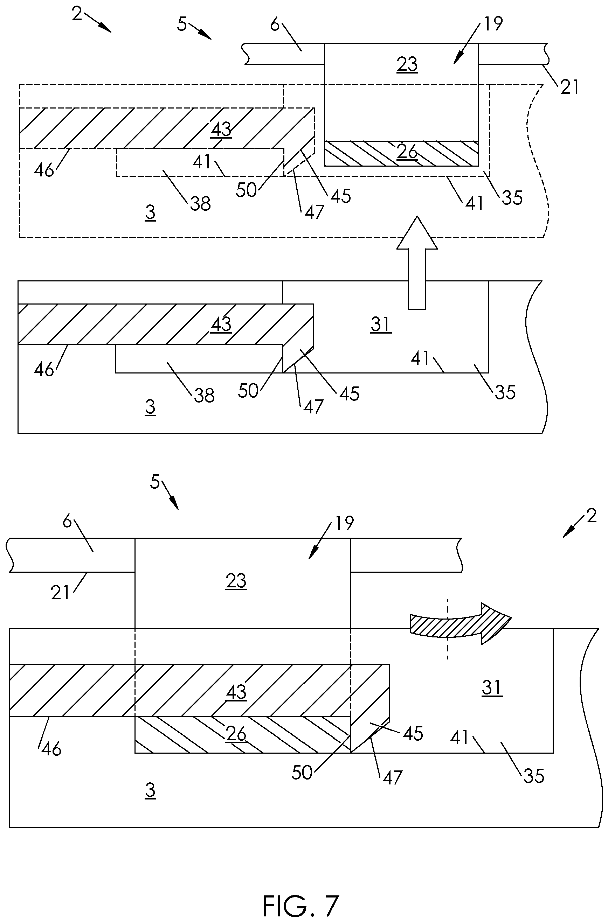

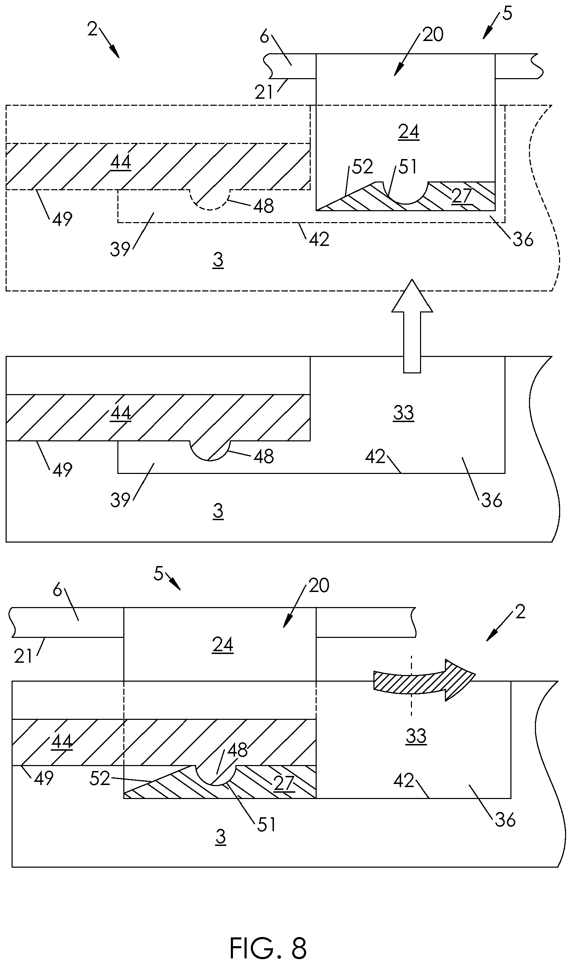

La figure 6 illustre la mise en position de la patte **18** de guidage dans la première encoche **30.** La figure 7 illustre la mise en position de la première patte **19** de blocage dans la deuxième encoche **31.** La figure 8 illustre la mise en position de la deuxième patte **20** de blocage dans la troisième encoche **33.**

Le filtre **3** à carburant est arrêté en translation dès lors que les trois pattes **18, 19, 20** de support touchent le fond **40, 41, 42** de chaque encoche **30, 31, 33.** Ensuite, le filtre **3** à carburant est mis en rotation, comme le montrent les flèches hachurées sur les figures 6, 7 et 8, de sorte à ce que les sections **25, 26, 27** secondaires des trois pattes **18, 19, 20** de support s'insèrent complètement dans les portions **37, 38, 39** de blocages des encoches **30, 31, 33.** Ainsi disposé, le filtre **3** à carburant est en position de blocage, comme le montre la figure 6, et le filtre **3** à carburant ne peut plus se détacher du support **5** à moins d'entreprendre les étapes de mise en position, décrites ci-dessus, dans l'ordre inverse.

De plus, les deux moyens de blocage ont consolidés la mise en position du filtre **3** à carburant, avec la première patte **19** de blocage et la deuxième patte **20** de blocage, en fixant la saillie **43** primaire à la première patte **19** de blocage et la saillie **44** secondaire à la deuxième patte **20** de blocage, comme illustré sur les figures 7 et 8.

En effet, lorsque la rotation du filtre **3** à carburant est initiée, à partir de sa position libre, dans laquelle la deuxième section **26** secondaire n'est pas en contact de la pente **47,** la deuxième section **26** secondaire rentre en contact de la pente **47.** La butée **45** et la saillie **43** primaire se déforment élastiquement pour venir se positionner derrière la deuxième section **26** secondaire, dans une position de blocage du filtre **3** à carburant. Avantageusement, la butée **45** et la saillie **43** primaire possèdent des propriétés géométriques permettant une déformation élastique de la butée **45** et de la saillie **43** primaire, facilitant ainsi l'insertion de la première patte **19** de blocage, dans la deuxième portion **38** de blocage. Une fois que la deuxième section **26** secondaire est complètement ancrée dans la deuxième portion **38** de blocage, la butée **45** et la saillie **43** primaire reprennent leur position initiale pour bloquer la deuxième section **26** secondaire et empêcher la rotation du filtre **3** à carburant, la butée **45** étant alors en contact avec un flanc **50** de la deuxième section **26** secondaire. La figure 7 montre les étapes de la mise en position de la première patte **19** de blocage pour l'immobilisation du filtre **3** à carburant, comme décrit ci-dessus.

Lorsque la rotation du filtre **3** à carburant est initiée à partir de sa position libre, dans laquelle la coupole **48** est écartée d'une réserve **51,** creusée dans la troisième section **27** secondaire, alors, la coupole **48** rentre en contact d'un plan **52** incliné et creusé dans la troisième section **27** secondaire, puis s'insère dans la réserve **51,** le plan **52** incliné facilitant l'insertion de la coupole **48** dans la réserve **51.** Avantageusement, la saillie **44** secondaire et la coupole **48** possèdent des propriétés géométriques permettant une déformation élastique, facilitant ainsi l'insertion de la deuxième patte **20** de blocage dans la troisième portion **39** de blocage. Une fois que la coupole **48** est en position dans la réserve **51,** le filtre **3** à carburant est bloqué en rotation. La figure 8 montre les étapes de la mise en position de la deuxième patte **20** de blocage pour l'immobilisation du filtre **3** à carburant, comme décrit ci-dessus.

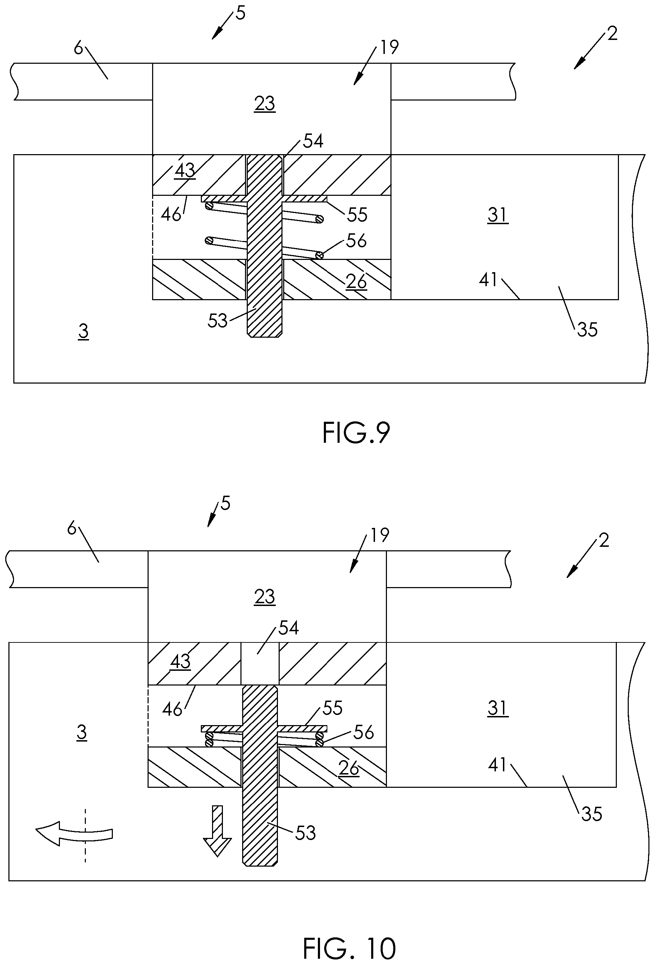

Selon une variante de réalisation, le système **2** de fixation est muni d'un troisième élément de blocage, pouvant être utilisé par paire ou en combinaison avec les deux autres éléments de blocage. Le troisième élément de blocage est un pion **53** de centrage, coulissant dans un trou **54,** traversant la saillie **43** primaire et la deuxième section **26** secondaire, comme illustré sur la figure 9. Le pion **53** de centrage est mobile entre deux positions, dans lesquelles le filtre **3** à carburant est en position libre ou en position de blocage. Dans la position de blocage du filtre **3** à carburant, un plateau **55** solidaire du pion **53** de centrage est au contact du bord **46** primaire inférieur, retenu dans cette position par un ressort **56** de rappel, disposé autour du pion **53** de centrage.

La figure 10 montre le système **2** de fixation lorsque le filtre **3** à carburant est en position libre, avec l'utilisation du troisième élément de blocage. Pour passer de la position de blocage du filtre **3** à carburant à sa position libre, il faut tirer sur le pion **53** de centrage, afin de l'abaisser, comme le montre la flèche hachurée de la figure 10. La partie du trou **54** traversant la saillie **43** primaire étant libre, le filtre **3** à carburant peut se mouvoir en rotation, comme l'indique la flèche blanche de la figure 10.

Selon une variante de réalisation, le troisième élément de blocage est une vis fendue, vissée dans le trou **54** et traversant la saillie **43** primaire et la deuxième section **26** secondaire.

Le système **2** de fixation qui vient d'être décrit présente plusieurs avantages.

Tout d'abord, le système **2** de fixation permet de mettre en position et de démonter le filtre **3** à carburant sans utiliser le moindre outil, d'accéder au filtre **3** à carburant par la caisse **4** en partie inférieure, sous le véhicule **1** automobile.

Le système **2** de fixation permet ainsi de diminuer le temps de montage et de démontage du filtre **3** à carburant par rapport à un système de fixation classique d'un filtre **3** à carburant.

De plus, le filtre **3** à carburant est démontable dans son intégralité, ce qui permet de remplacer l'ensemble du filtre **3** à carburant et pas uniquement la cartouche du filtre **3** à carburant, limitant ainsi le nombre de pièces utilisées pour relier le filtre **3** à carburant à la caisse **4** du véhicule **1** automobile, le corps **28** cylindrique du filtre **3** à carburant comprenant déjà des éléments de solidarisation avec la caisse **4.**

Enfin, les éléments de blocage du système **2** de fixation permettent de sécuriser le maintien du filtre **3** à carburant sur la caisse **4** et empêchent le détachement ou la chute du filtre **3** à carburant.

## Revendications

1. Système (**2**) de fixation d'un filtre (**3**) à carburant sur une caisse (**4**) d'un véhicule (**1**) automobile, le système (**2**) de fixation comprenant :
- un support (**5**) solidarisable à la caisse (**4**) et muni d'au moins deux pattes (**18, 19**) de support,
- un corps (**28**) cylindrique destiné à recevoir le filtre (**3**) à carburant et prolongé d'une collerette (**29**) creusée d'au moins deux encoches (**30**, **31**) en forme de L définissant une portion (**34, 35**) d'insertion et une portion (**37, 38**) de blocage, aptes à recevoir les deux pattes (**18, 19**) de support pour la mise en position du filtre (**3**) à carburant sur le support (**5**), lesdites encoches (**30, 31**) débouchant sur un bord (**32**) supérieur de la collerette (**29**), **caractérisé en ce que :**
- le corps (**28**) cylindrique comprend au moins une saillie (**43**) primaire,
- les deux pattes (**18, 19**) de support sont composées d'une patte (**18**) de guidage et d'une première patte (**19**) de blocage,
- le système (**2**) de fixation comprend un élément de blocage élastique permettant l'immobilisation amovible de la première patte (**19**) de blocage par rapport à la saillie (**43**) primaire.

2. Système (**2**) de fixation selon la revendication 1, **caractérisé en ce que** le corps (**28**) cylindrique comprend une troisième encoche (33) apte à recevoir la patte (**18**) de guidage

3. Système (**2**) de fixation selon la revendication 1 ou 2, **caractérisé en ce que** l'élément de blocage élastique est une butée (**45**) solidaire de la saillie (**43**) primaire, apte à venir au contact d'un flanc (**50**) de la première patte (**19**) de blocage pour maintenir la première patte (**19**) de blocage dans la deuxième portion (**38**) de blocage.

4. Système (**2**) de fixation selon la revendication 1 ou 2, **caractérisé en ce que** l'élément de blocage élastique est une coupole (**48**) solidaire de la saillie (**43**) primaire, apte à s'insérer dans une réserve (**51**) creusée dans la première patte (**19**) de blocage pour maintenir la première patte (**19**) de blocage dans la deuxième portion (**38**) de blocage.

5. Système (**2**) de fixation selon la revendication 1 ou 2, **caractérisé en ce que** l'élément de blocage élastique est solidaire de la première patte (**19**) de blocage et mobile entre deux positions :
- une position de blocage du filtre (**3**) à carburant dans laquelle l'élément de blocage élastique vient s'insérer dans un trou (**54**) de la saillie (**43**) primaire, permettant le maintien en position de la première patte (**19**) de blocage dans la deuxième portion (**38**) de blocage,
- une position libre du filtre (**3**) à carburant dans laquelle l'élément de blocage élastique est écarté du trou (**54**) de la saillie (**43**) primaire, permettant la rotation du filtre (**3**) à carburant et l'échappement de la première patte (19**)** de blocage par la deuxième portion (**35**) d'insertion.

6. Système (**2**) de fixation selon la revendication 5, **caractérisé en ce que** l'élément de blocage élastique est un pion (**53**) de centrage coulissant par rapport à la première patte (**19**) de blocage, un ressort (**56**) de rappel enveloppant le pion (**53**) de centrage étant situé entre la saillie (**43**) primaire et la première patte (**19**) de blocage, et un plateau (**55**) solidaire du pion (**53**) de centrage étant positionné entre la saillie (**43**) primaire et le ressort (**56**) de rappel de sorte à :
- venir au contact de la saillie (**43**) primaire dans la position de blocage du filtre (**3**) à carburant,
- venir au contact de la première patte (**19**) de blocage dans la position libre du filtre (3**)** à carburant.

7. Système (**2**) de fixation selon l'une quelconque des revendications précédentes, **caractérisé en ce que** le support (**5**) comprend une deuxième patte (**20**) de blocage, le corps (**28**) cylindrique comprenant une saillie (**44**) secondaire, le système (**2**) de fixation comprenant un deuxième élément de blocage élastique permettant l'immobilisation de la deuxième patte (**20**) de blocage par rapport à la saillie (**44**) secondaire.

8. Système (**2**) de fixation selon la revendication 7, **caractérisé en ce que** le deuxième élément de blocage élastique est une butée solidaire de la saillie (**44**) secondaire, apte à venir au contact d'un flanc de la deuxième patte (**20**) de blocage pour maintenir la deuxième patte (**20**) de blocage dans la deuxième portion de blocage.

9. Système (2) de fixation selon la revendication 7, **caractérisé en ce que** le deuxième élément de blocage élastique est une coupole, solidaire de la saillie (**44**) secondaire, apte à s'insérer dans une réserve creusée dans la deuxième patte (**20**) de blocage pour maintenir la deuxième patte (**20**) de blocage dans la deuxième portion de blocage.

10. Véhicule (**1**) automobile comprenant un système (**2**) de fixation selon l'une quelconque des revendications précédentes.

## Patentansprüche

1. System (2) zur Befestigung eines Kraftstofffilters (3) auf einer Karosserie (4) eines Kraftfahrzeugs (1), wobei das Befestigungssystem (2) Folgendes umfasst:
- einen Träger (5), der mit der Karosserie (4) fest verbindbar und mit mindestens zwei Tragpratzen (18, 19) versehen ist,
- einen zylindrischen Körper (28), der dazu bestimmt ist, das Kraftstofffilter (3) aufzunehmen, und der mit einem Bund (29) verlängert ist, in den mindestens zwei Kerben (30, 31) in L-Form vertieft sind, die einen Einsetzabschnitt (34, 35) und einen Blockierungsabschnitt (37, 38) definieren, die geeignet sind, die zwei Tragpratzen (18, 19) für das Positionieren des Kraftstofffilters (3) auf dem Träger (5) aufzunehmen, wobei die Kerben (30, 31) auf einem oberen Rand (32) des Bunds (29) münden, **dadurch gekennzeichnet, dass**:
- der zylindrische Körper (28) mindestens einen Primärvorsprung (43) umfasst,
- die zwei Tragpratzen (18, 19) aus einer Führungspratze (18) und einer ersten Blockierungspratze (19) bestehen,
- das Befestigungssystem (2) ein elastisches Blockierungselement umfasst, das das abnehmbare Stillstellen der ersten Blockierungspratze (19) bezüglich des Primärvorsprungs (43) erlaubt.

2. Befestigungssystem (2) nach Anspruch 1, **dadurch gekennzeichnet, dass** der zylindrische Körper (28) eine dritte Kerbe (33) umfasst, die geeignet ist, die Führungspratze (18) aufzunehmen.

3. Befestigungssystem (2) nach Anspruch 1 oder 2, **dadurch gekennzeichnet, dass** das elastische Blockierungselement ein Anschlag (45) ist, der fest mit dem Primärvorsprung (43) verbunden ist, der geeignet ist, mit einem Flansch (50) der ersten Blockierungspratze (19) in Berührung zu kommen, um die erste Blockierungspratze in dem zweiten Blockierungsabschnitt (38) zu halten.

4. Befestigungssystem (2) nach Anspruch 1 oder 2, **dadurch gekennzeichnet, dass** das elastische Blockierungselement eine Kuppel (48) ist, die fest mit dem Primärvorsprung (43) verbunden ist, die geeignet ist, sich in eine Aussparung (51) einzufügen, die in der ersten Blockierungspratze (19) vertieft ist, um die erste Blockierungspratze (19) in dem zweiten Blockierungsabschnitt (38) zu halten.

5. Befestigungssystem (2) nach Anspruch 1 oder 2, **dadurch gekennzeichnet, dass** das elastische Blockierungselement fest mit der ersten Blockierungspratze (19) verbunden und zwischen zwei Positionen beweglich ist:
- eine Blockierungsposition des Kraftstofffilters (3), in der sich das elastische Blockierungselement in eine Bohrung (54) des Primärvorsprungs (43) einfügen kommt, die das Halten in Position der ersten Blockierungspratze (19) in dem zweiten Blockierungsabschnitt (38) erlaubt,
- eine freie Position des Kraftstofffilters (3), in der das elastische Blockierungselement von der Bohrung (54) des Primärvorsprungs (43) abgespreizt ist, was das Drehen des Kraftstofffilters (3) und das Austreten der ersten Blockierungspratze durch den zweiten Einsetzabschnitt (35) erlaubt.

6. Befestigungssystem(2) nach Anspruch 5, **dadurch gekennzeichnet, dass** das elastische Blockierungselement ein Zentrierstift (53) ist, der bezüglich der ersten Blockierungspratze (19) gleitet, wobei eine Rückstellfeder (56) den Zentrierstift (53) einhüllt, indem sie zwischen dem Primärvorsprung (43) und der ersten Blockierungspratze (19) liegt, und eine Platte (55), die fest mit dem Zentrierstift (53) verbunden ist, indem sie zwischen dem Primärvorsprung (43) und der Rückstellfeder (56) derart positioniert ist, dass:
- sie mit dem Primärvorsprung (43) in der Blockierungsposition des Kraftstofffilters (3) in Berührung kommt,
- mit der ersten Blockierungspratze (19) in der freien Position des Kraftstofffilters (3) in Berührung kommt.

7. Befestigungssystem (2) nach einem der vorstehenden Ansprüche, **dadurch gekennzeichnet, dass** der Träger (5) eine zweite Blockierungspratze (20) umfasst, wobei der zylindrische Körper (28) einen Sekundärvorsprung (44) umfasst, wobei das Befestigungssystem (2) ein zweites elastisches Blockierungselement umfasst, das das Stillstellen der zweiten Blockierungspratze (20) bezüglich des Sekundärvorsprungs (44) erlaubt.

8. Befestigungssystem (2) nach Anspruch 7, **dadurch gekennzeichnet, dass** das zweite elastische Blockierungselement ein Anschlag ist, der fest mit dem Sekundärvorsprung (44) verbunden ist, der geeignet ist, mit einer Flanke der zweiten Blockierungspratze (20) in Berührung zu kommen, um die zweite Blockierungspratze (20) in dem zweiten Blockierungsabschnitt zu halten.

9. Befestigungssystem (2) nach Anspruch 7, **dadurch gekennzeichnet, dass** das zweite elastische Blockierungselement eine Kuppel ist, die fest mit dem Sekundärvorsprung (44) verbunden ist, die geeignet ist, sich in eine Aussparung einzufügen, die in der zweiten Blockierungspratze (20) vertieft ist, um die zweite Blockierungspratze (20) in dem zweiten Blockierungsabschnitt zu halten.

10. Kraftfahrzeug (1), das ein Befestigungssystem (2) nach einem der vorstehenden Ansprüche umfasst.

## Claims

1. A system (2) for attaching a fuel filter (3) on a body (4) of a motor vehicle (1), the attachment system (2) including:
- a support (5) which is able to be secured to the body (4) and is provided with at least two supporting tabs (18, 19),
- a cylindrical body (28) intended to receive the fuel filter (3) and extended by a flange (29) cut in by at least two L-shaped notches (30, 31) defining an insertion portion (34, 35) and a blocking portion (37, 38), capable of receiving the two supporting tabs (18, 19) for the placing in position of the fuel filter (3) on the support (5), said notches (30, 31) opening onto an upper edge (32) of the flange (29), **characterized in that**
- the cylindrical body (28) includes at least one primary projection (43),
- the two supporting tabs (18, 19) are composed of a guiding tab (18) and a first blocking tab (19),
- the attachment system (2) includes an elastic blocking element permitting the releasable immobilisation of the first blocking tab (19) with respect to the primary projection (43).

2. The attachment system (2) according to Claim 1, **characterized in that** the cylindrical body (28) includes a third notch (33) capable of receiving the guiding tab (18).

3. The attachment system (2) according to Claim 1 or 2, **characterized in that** the elastic blocking element is a stop (45) integral with the primary projection (43), capable of coming in contact with a flank (50) of the first blocking tab (19) so as to retain the first blocking tab (19) in the second blocking portion (38).

4. The attachment system (2) according to Claim 1 or 2, **characterized in that** the elastic blocking element is a dome (48) integral with the primary projection (43), capable of being inserted in a reserve (51) cut out in the first blocking tab (19) so as to retain the first blocking tab (19) in the second blocking portion (38).

5. The attachment system (2) according to Claim 1 or 2, **characterized in that** the elastic blocking element is integral with the first blocking tab (19) and movable between two positions:
- a blocking position of the fuel filter (3) in which the elastic blocking element comes to be inserted in a hole (54) of the primary projection (43), permitting the retaining in position of the first blocking tab (19) in the second blocking portion (38),
- a free position of the fuel filter (3) in which the elastic blocking element is spaced apart from the hole (54) of the primary projection (43), permitting the rotation of the fuel filter (3) and the escaping of the first blocking tab (19) by the second insertion portion (35).

6. The attachment system (2) according to Claim 5, **characterized in that** the elastic blocking element is a centring pin (53) sliding with respect to the first blocking tab (19), a return spring (56) enveloping the centring pin (53) being situated between the primary projection (43) and the first blocking tab (19), and a plate (55) integral with the centring pin (53) being positioned between the primary projection (43) and the return spring (56) so as to:
- come in contact with the primary projection (43) in the blocking position of the fuel filter (3),
- come in contact with the first blocking tab (19) in the free position of the fuel filter (3).

7. The attachment system (2) according to any one of the preceding claims, **characterized in that** the support (5) includes a second blocking tab (20), the cylindrical body (28) including a secondary projection (44), the attachment system (2) including a second elastic blocking element permitting the immobilisation of the second blocking tab (20) with respect to the secondary projection (44).

8. The attachment system (2) according to Claim 7, **characterized in that** the second elastic blocking element is a stop integral with the secondary projection (44), capable of coming in contact with a flank of the second blocking lug (20) so as to retain the second blocking tab (20) in the second blocking portion.

9. The attachment system (2) according to Claim 7, **characterized in that** the second elastic blocking element is a dome, integral with the secondary projection (44), capable of being inserted in a reserve cut out in the second blocking tab (20) so as to retain the second blocking tab (20) in the second blocking portion.

10. A motor vehicle (1) including an attachment system (2) according to any one of the preceding claims.
